# EUROPEAN PATENT APPLICATION

(11) **EP 4 845 114 A1**
(43) Date of publication of application: **25.11.2026**
(21) Application number: 25178613.3
(22) Date of filing: 23.05.2025
(51) Int. Cl.: H04L 41/342, G06F 9/50, H04W 24/02, H04L 41/40, H04L 43/0817

(54) **METHOD, APPARATUS AND COMPUTER PROGRAM FOR FORWARDING CONTROL PLANE SIGNALING DATA TO CONTAINERIZED APPLICATIONS**

(71) Applicant: Deutsche Telekom AG, 53113 Bonn (DE)
(72) Inventor: BAYER, Nico, 61231 Bad Nauheim (DE); DSOUZA, Felix, 53225 Bonn (DE); GALLEGO SANCHEZ, Adrian, 19004 Guadalajara (ES)
(74) Representative: 2SPL Patentanwälte PartG mbB

(57) **Abstract**

Provided is a method for a mobile communications network. The mobile communication network is configured for providing at least one control plane function as a containerized application. The method includes receiving control plane signaling data intended for the at least one control plane function. The method further includes determining, based on state data of a plurality of runtime-environments each hosting a plurality of containers, a runtime-environment to realize the at least one control plane function. The method further includes forwarding the control plane signaling data to the determined runtime-environment.

## Description

### Field

The present disclosure relates to methods, apparatuses, a computer program and a mobile communications network.

### Background

In 5G networks, an interface between a next generation node B (gNodeB) and an access and mobility management function (AMF) are typically based on an N2 interface responsible for control plane signaling, facilitating communication and coordination between the radio access network (RAN) and the core network. For example, the N2 interface facilitates initial user equipment (UE) registration if it connects to the 5G network for the first time, ensuring that user data and context are properly established. The N2 interface may further handle signaling required for seamless handovers when a UE moves between different gNBs, maintaining session continuity and minimizing disruptions. The N2 interface may further facilitate UE context information management, such as security parameters, subscription data, and service settings, ensuring that the AMF has up-to-date information for decision-making. The N2 interface may further support paging of UEs to notify them of incoming calls or data sessions, coordinating with the RAN to efficiently locate and alert the devices.

The N2 interface may be based on the Stream Control Transmission Protocol (SCTP) which may provide reliable, message-oriented communication. SCTP may ensure that signaling messages between the gNB and AMF are delivered in sequence and without loss, even in the presence of network failures or congestion. In essence, the N2 interface may be vital for maintaining control plane operations in a 5G network (and potentially in a 6G network), ensuring efficient management of mobility, session continuity, and overall network performance.

In the rapidly evolving landscape of 5G networks, the ability to efficiently scale core network functions may be considered essential for maintaining optimal performance and reliability. For example, Kubernetes may relate to a container orchestration platform that offers mechanisms to meet these demands through its native capabilities for managing containerized applications. Kubernetes may be designed to automate deployment, scaling, and management of containerized applications. At its core, Kubernetes may operate with a set of basic building blocks, i.e., pods, services, deployments, and StatefulSets, each playing their role in ensuring the operation of applications in a cloud-native environment.

Core network functions (CNFs) in 5G, such as the AMF, may be responsible for crucial tasks like user equipment registration, session management, and mobility management. These functions must be highly reliable and scalable to handle the dynamic nature of 5G traffic and the stringent requirements of modern telecommunications networks.

A mechanism in Kubernetes to provide scalability is the so-called Horizontal Pod Autoscaler (HPA) which may scale the number of Pods in a deployment based on observed CPU utilization or other available metrics (i.e., memory load, third party metrics, or the like). HPA may automatically adjusts the number of replicas of an application based on its current load, ensuring that the application can handle varying levels of demand without manual intervention. This may enable and ensure an automated approach to scale-out or scale-in Kubernetes resources.

For example, a CNF deployment in Kubernetes may start with defining a deployment object that specifies the number of initial replicas, resource requests, and limits. A service may be created to expose the NF pods outside of the cluster so that external entities are able to reach their services. The HPA may be configured to monitor the CPU utilization of the NF Pods. For example, the HPA may be set to maintain a target CPU utilization of 60%. If the CPU utilization exceeds this threshold, the HPA may scale-out the number of NF Pods to distribute the load. Conversely, if the utilization drops, the HPA may scale-in the number of Pods to optimize resource usage. For stateful components of the NF, such as databases or user session storage, StatefulSets may be used to ensure stable network identities and persistent storage.

There may be a demand for improved utilization of network functions that are deployed as containerized applications.

### Summary

The present disclosure is based on the finding that although there exist techniques for containerizing network functions, several challenges may arise in core deployment, e.g., concerning static and inefficient handling of AMF connections due to the usage of the SCTP protocol. Unlike many other interfaces in the 5G Core (5GC) that employ a service-based interface (SBI) paradigm, the N2 interface is fundamentally a point-to-point interface. This finding is crucial as it may impact the deployment and scaling strategies of core network functions. While SBI may enable flexible and dynamic service interactions among network functions, the point-to-point nature of the N2 interface may mandate direct communication between the gNB and AMF. SCTP may be inherently stateful, which means that gNBs are designed to maintain long-lived SCTP associations with the AMF. However, when an AMF pod is scaled-in or restarted, the gNB might not easily reestablish the SCTP association with a new AMF instance because it might not dynamically retrieve a new IP or hostname. gNBs might not be inherently aware of the containerized application (such as Kubernetes), so they may rely on DNS or static IPs. The point-to-point configuration of the N2 interface may necessitate precise management of connections, as each gNB may need to establish and maintain a direct link to an AMF instance. This setup may differ from the service-oriented interactions that characterize other 5GC interfaces, thus leading to unique challenges in scaling and managing AMF deployments.

In a cloud-native environment, resources may need to be dynamically allocated based on demand. However, the need for manual reconfiguration to accommodate changes may undermine the flexibility that autoscaling provides. Consequently, the network may fail to be truly cloud-native and resource-efficient, leading to suboptimal utilization of network resources.

Cloud-native environments may inherently provide robust load balancing for TCP and UDP traffic. However, their support for SCTP may be limited. This limitation may pose a problem for distributing N2 traffic, which relies on SCTP for reliable, in-sequence transport of signaling messages, across multiple AMF instances.

Even in scenarios where SCTP support is present, cloud-native load balancers may need to be capable of handling SCTP's stateful associations to maintain seamless connections. SCTP may further require maintaining the state of associations (connections) between the gNB and AMF, ensuring that messages are not only delivered reliably but also in the correct sequence. Additionally, from the UE perspective, UEs may need to re-initiate registration or authentication procedures with a new AMF pod if the connection is lost due to scaling. This may add latency and may disrupt active sessions. If the UE's state isn't properly synchronized or restored in the new AMF instance, the UE may experience dropped connections, delays, or even the need for full reconnection to the network.

According to a first aspect, the disclosure provides a method for a mobile communications network. The mobile communication network is configured for providing at least one control plane function as a containerized application. The method includes receiving control plane signaling data intended for the at least one control plane function. The method further includes determining, based on state data of a plurality of runtime-environments each hosting a plurality of containers, a runtime-environment to realize the at least one control plane function. The method further includes forwarding the control plane signaling data to the determined runtime-environment.

Thereby, efficient load balancing may be provided.

In an example relating to the first aspect (or to any other aspect) the at least one control plane function includes the AMF.

Thereby, challenges discussed above with respect to the N2 interface may be accommodated.

In an example relating to the first aspect (or to any other aspect) the state data are received from a network repository function.

Thereby, intelligent load balancing may be provided based on up-to-date state data.

In an example relating to the first aspect (or to any other aspect), the control plane signaling data includes data to be transmitted via a control plane interface.

Thereby, challenges discussed above with respect to the N2 interface (or the N1 interface which uses the N2 interface as tunnel) may be accommodated.

In an example relating to the first aspect (or to any other aspect), the determining of the runtime-environment is based on a load balancing policy.

Thereby, similar effects as above or below may be achieved.

In an example relating to the first aspect (or to any other aspect) the method is at least partially carried out by a load balancing instance in the mobile communications network. In such an example, the mobile communications network includes a plurality of load balancing instances. For determining the runtime-environment, the method further includes selecting a suitable load balancing instance to forward the control plane signaling data.

Thereby, loads between the runtime-environments may further be distributed.

According to a second aspect, the disclosure provides a method for a mobile communications network. The mobile communications network is configured for providing at least one control plane function as a containerized application. The method includes maintaining a database of runtime-environments. Each runtime-environment hosts a plurality of containers for realizing the at least one control plane function. The maintaining of the database includes tracking availability and online-status of the plurality of runtime-environments.

Thereby, up-to-date state data of the at least one control plane function may be provided for efficient and intelligent load balancing.

In an example relating to the second aspect (or to any other aspect), the method further includes providing state data to the control plane function.

Thereby, the control plane functions may further distribute the load among each other.

In an example relating to the second aspect (or to any other aspect), the method further includes providing, to the at least one control plane function, metadata about a user equipment intending to make use of the at least one control plane function.

Thereby, a UE state may be predicted or determined and efficiently retrieved when a container hosting a control plane function terminates or needs to be routed to a newly opened container.

According to a third aspect, the disclosure provides a computer program including instructions which, when the computer program is carried out on a computer or processing circuitry, cause the computer or processing circuitry to carry out the method according to the first aspect or according to any one or multiple examples relating to the first aspect, and/or according to the second aspect or according to any one or multiple examples relating to the second aspect.

Thereby, similar effects as above or below may be achieved.

According to a fourth aspect, the disclosure provides a non-transitory machine-readable medium including instructions which, when carried out on a computer or processing circuitry, cause the computer or processing circuitry to carry out the method according to the first aspect or according to any one or multiple examples relating to the first aspect, and/or according to the second aspect or according to any one or multiple examples relating to the second aspect.

Thereby, similar effects as above or below may be achieved.

According to a fifth aspect, the disclosure provides an apparatus for forwarding control plane signaling data. The apparatus includes processing circuitry configured to carry out the method according to the first aspect or according to any one or multiple examples relating to the first aspect.

Thereby, similar effects as above or below may be achieved.

According to a sixth aspect, the disclosure provides an apparatus for maintaining a database of runtime-environments. The apparatus includes processing circuitry configured to carry out the method according to the second aspect or according to any one or multiple examples relating to the second aspect.

Thereby, similar effects as above or below may be achieved.

According to a seventh aspect, the disclosure provides a mobile communications network including an apparatus for forwarding control plane signaling data according to the fifth aspect. The mobile communications network further includes an apparatus for maintaining a database of runtime-environments according to the sixth aspect.

Thereby, similar effects as above or below may be achieved.

In some examples relating to the seventh aspect (or to any other aspect), the mobile communications network includes at least two apparatuses for forwarding control plane signaling data according to the fifth aspect. The at least two apparatuses are interconnected with an east-west-interface for intercommunicating and load balancing of received control plane signaling data.

Thereby, load may be distributed among the at least two apparatuses with the east-west interface.

In some examples, the mobile communication network further includes processing circuitry configured to host at least one control plane function for each apparatus for forwarding control plane signaling data.

Thereby, similar effects as above or below may be achieved.

Further aspects are set forth in the dependent claims, the drawings, and the following description.

### Brief description of the Figures

Some examples of apparatuses and/or methods will be described in the following by way of example only, and with reference to the accompanying figures, in which
Fig. 1 depicts a flowchart of a method for a mobile communications network according to the present disclosure;
Fig. 2 depicts a block diagram of a further method for a mobile communications network according to the present disclosure;
Fig. 3 depicts a block diagram of an apparatus for forwarding control plane signaling data according to the present disclosure;
Fig. 4 depicts a block diagram of an apparatus for maintaining a database of runtime-environments according to the present disclosure;
Fig. 5 depicts a block diagram of a mobile communications network according to the present disclosure; and
Fig. 6 depicts a sequence diagram of multiple methods for operating the mobile communications network of Fig. 5.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

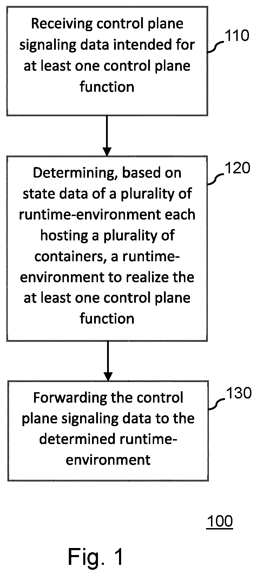

Fig. 1 depicts a method 100 for a mobile communications network.

A mobile communications network may refer to a system based on infrastructure, software components, and protocols configured to provide mobile connectivity, mobility support, and communication services to user equipment (UE) through a combination of radio access and core network elements. The mobile communications network may support standardized interfaces and protocols defined by telecommunication standards, such as 3GPP (Third Generation Partnership Project). For example, the mobile communications network may be based on a 5G network architecture including Next Generation NodeBs (gNBs), a 5G Core (5GC) including Access and Mobility Management Functions (AMFs), Session Management Functions (SMFs), User Plane Functions (UPFs), control plane interfaces (e.g., N1, N2, N3, N11), or the like, based on a Long Term Evolution (LTE) network with Evolved Packet Core (EPC) elements such as the Mobility Management Entity (MME), based on a 6G infrastructure, or the like.

At least one control plane function may refer to a logical component or network entity that operates on the control plane of a mobile communications network and is responsible for processing signaling messages and performing decision-making tasks related to the operation and coordination of the network. The control plane may refer to a logical part of the network architecture configured to handle signaling, connection setup, resource allocation, authentication, mobility, and session management, e.g., as opposed to the user plane, which may be responsible for transporting user data (e.g., voice, video, internet traffic, or the like). The control plane functions may interact with other network components using standardized signaling protocols and interfaces, and they may perform operations that establish and maintain the context necessary for user communication sessions. Control plane functions might not process user data packets directly but may still be essential for enabling the routing and policy decisions that underpin such data flows. For example, the at least one control plane function may include at least one of an Access and Mobility Management Function (AMF) (responsible for managing user registration, reachability, and mobility across the radio access network), a Session Management Function (SMF) (which may manage packet data unit (PDU) sessions, IP address allocation, and interaction with the user plane), a Policy Control Function (PCF) (which may enforce service and quality of service (QoS) policies across sessions and users), and the like.

The at least one control plane function may be carried out as a containerized application. A containerized application may refer to a software component, microservice, or network function that is packaged together with its executable code, required libraries, configuration files, and runtime dependencies into a self-contained unit known as a container. A container may be instantiated in a consistent and isolated manner across different host environments, ensuring reliable execution irrespective of the underlying infrastructure. The container may encapsulate the executable and its operating context to ensure consistent behavior across different computing environments, enabling portability and isolation. Encapsulating the executable and its operating context may refer to the process of including, within the container, not only the binary or script that constitutes the main application logic (the "executable"), but also the full set of environmental components required for its proper operation. These may include software libraries and shared objects upon which the executable depends; configuration files, system settings, and runtime variables; supporting tools and/or scripts used to launch or manage the application; a base operating system image or minimal runtime layer that ensures compatibility with the host system; and the like.

Containerized applications may be deployed in environments that support container orchestration and dynamic lifecycle management, e.g., a cloud-native infrastructure, such as a computing environment or architectural model optimized for microservice-based applications deployed as containers. Cloud-native infrastructure may be built on container orchestration platforms such as Kubernetes, and support dynamic scaling, automated deployment, lifecycle management, and inter-service communication through software-defined networking, service meshes, internal APIs, or the like.

For example, the containerized application may include a Docker container implementing an Access and Mobility Management Function (AMF) of a 5G core network, and the container image may comprise the AMF binary, and for example at least one of 3GPP-compliant protocol libraries, a YAML configuration file with instance-specific settings, a minimal Linux-based base image, and the like. The container may be orchestrated and managed within a Kubernetes environment, in some examples, and may be deployed, updated, and scaled independently of other network functions in accordance with the service-based architecture of the mobile communications network.

The method 100 includes receiving, 110, control plane signaling data intended for the at least one control plane function.

Control plane signaling data may refer to data units or protocol messages within the mobile communications network that are associated with the at least one control plane function rather than user plane functions. Such signaling data may serve to establish, modify, or terminate control plane contexts, sessions, connections, functions, or the like, between network entities or between UE and the mobile communications network. For example, in a 5G system architecture, control plane signaling data may include messages exchanged over interfaces such as the N1 interface (between the UE and the AMF) and the N2 interface (between the gNB and the AMF). These messages may encapsulate Non-Access Stratum (NAS) protocol messages, which may be embedded in NGAP (Next Generation Application Protocol) signaling when transmitted between the radio access network (RAN) and the 5G core. The control plane signaling data may initiate procedures such as registration, authentication, mobility management, session establishment, paging, context release, or the like. For example, the control plane signaling data may include a Registration Request message originating from the UE, a DL NAS Transport message from the AMF to the gNB, or a Handover Required message generated by the gNB and forwarded to the AMF. Such data may be transmitted using signaling transport protocols such as SCTP/IP over standardized interfaces, and may be processed by control plane functions including, but not limited to, the AMF, SMF, or PCF.

The control plane signaling data is intended for the at least one control plane function because it may represent requests, status reports, or triggers that require decision-making or state management by the at least one control plane function. These data may serve as input stimuli to initiate or modify internal state machines, trigger state transitions, or invoke communication with other network functions. Each control plane function may be responsible for interpreting specific types of signaling data and performing corresponding network actions.

For example, a Registration Request NAS message (as control plane signaling data) sent by a UE may be encapsulated in an NGAP Initial UE Message and forwarded to the AMF (as the at least one control plane function). This message may be intended for the AMF because it may trigger user authentication and context setup procedures handled exclusively by that function. In another example, a PDU Session Establishment Request (as control plane signaling data) encapsulated in a NAS message may be routed to the SMF (as the at least one control plane function), as it may be responsible for allocating IP addresses and coordinating user plane resources. In another example, a Handover Required message (as control plane signaling data) from the gNB may signal a mobility event and may be intended for the AMF (as the at least one control plane function), which may coordinate the handover decision and signaling flow toward the target cell. In another example, a policy update request (as control plane signaling data) may be intended for the PCF (as the at least one control plane function) in response to application-layer events or QoS changes, prompting policy re-evaluation for an ongoing session.

The method 100 further includes determining, 120, based on state data of a plurality of runtime-environments each hosting a plurality of containers, a runtime-environment to realize the at least one control plane function.

State data of may refer to (machine-readable) data/information that characterizes the current operational status, availability, performance, and configuration of multiple execution contexts (i.e., the runtime-environments) that are capable of hosting one or more containerized control plane functions. State data may be used to support intelligent, context-aware selection and routing decisions within the mobile communications network. The state data may include, but is not limited to at least one of availability status (e.g., online/offline/reachable), resource usage metrics (e.g., CPU utilization, memory load, network throughput), assigned network addresses (e.g., internal IP addresses or service endpoints), deployment metadata (e.g., pod labels, container version, assigned slices), health indicators (e.g., container liveness/readiness probes, error rates), or the like.

For example, a mobile core orchestration system (such as Kubernetes or an NFV MANO stack) may provide real-time telemetry about AMF pods running on different nodes. This telemetry (e.g., gathered through a metrics server or network repository function (NRF)) may include the current CPU load of each host node, the IP address of each pod, and whether each container is marked "ready" to receive control plane signaling data traffic. This state data may enable load balancers and/or control logic to make informed decisions about where to forward the control plane signaling data traffic, i.e., to which runtime-environment of the plurality of runtime-environments.

A runtime-environment may refer to a logical or physical execution context within a computing infrastructure where containerized applications can be instantiated, managed, and executed, i.e., which hosts at least one container (or a plurality of containers). In the context of the mobile communications network of the present disclosure, a runtime-environment may support container orchestration and provide the necessary system-level resources for executing the at least one control plane function. A runtime-environment may include a Kubernetes pod (which may group one or more containers with shared network and storage resources), a virtual machine (VM) or bare-metal server (configured to host containers or container clusters), a microservice sandbox (e.g., managed via service mesh infrastructure), or the like. The runtime-environment may include a container engine (e.g., Docker runtime), networking stack (e.g., IP address, virtual interface, or the like), scheduling/management hooks for lifecycle control, local or remote access to configuration volumes, secrets, and monitoring agents, or the like. For example, in a Kubernetes-based deployment, each AMF pod may constitute a runtime-environment that encapsulates the AMF logic, a sidecar proxy (e.g., Envoy), and monitoring agents, and may be scheduled to run on a particular compute node with assigned compute and memory limits.

In other words, the runtime-environment may realize the at least one control plane function, i.e., it may instantiate, execute, and operationally deploy the at least one control plane function in at least one container. Realization may include all actions required to perform the designated signaling tasks of the function, such as interpreting messages, maintaining context state, interacting with other network functions, and returning appropriate signaling responses. This realization may include at least one of spinning up a containerized control plane function, Restoring context or loading initial configuration for active handling of UE signaling, handling interface-specific logic (such as NAS or NGAP message parsing and response generation), performing operations (such as registration, handover coordination, or session setup), and the like. For example, when a selected AMF pod receives a Registration Request, it may realize the AMF function by authenticating a user, updating its internal UE context database, and returning a Registration Accept message, all of which may constitute the live operation of the AMF.

As indicated above, according to the present disclosure, the state data may be received from the NRF. The NRF may constitute a logical function in the mobile communications network that is responsible for maintaining and exposing discovery, registration, and status information about network functions deployed in the core network. The NRF may be defined by 3GPP (e.g., in TS 23.501 and TS 29.510) and may operate as part of the Service-Based Architecture (SBA). However, according to the present disclosure the functionality of the NRF may be extended to store and provide state data and metadata of context and sessions of the UE and in some examples, of the state of the UE. In other words, in the context of the present disclosure, NRF may act as a central service registry that may maintain an internal or external database about the plurality of runtime-environments and may thus also store the state data or may derive the state data from the database. For example, a load balancer of the mobile communications network may query the NRF to discover which runtime-environment is currently available to handle signaling traffic. The NRF may return a list of registered AMF instances (as an example of the state data), along with associated network addresses (and service metadata, in some example).

When the runtime-environment is determined (based on the state data, e.g., based on availability, load-balancing considerations, or the like, as discussed above), the method 100 further includes forwarding, 130, the control plane signaling data to the determined runtime-environment. Forwarding the control plane signaling data may refer to the transmission or redirection of the control plane signaling data to the determined runtime-environment where the corresponding control plane function processes the data. This may involve resolving the network address of the selected environment, constructing a suitable signaling message format, and transmitting it over an internal service interface or data plane connection. For example, forwarding may comprise routing a NAS message to a selected AMF pod by resolving its internal cluster IP via a Kubernetes service.

In the mobile communications network according to the present disclosure, the forwarding may occur over one or more control plane interfaces, e.g., defined by a 3GPP standard. Such an interface may be used for delivering signaling messages between network elements in the access network and the core, or between functions within the core itself. The interface used may depend on the direction of the signaling flow and the network elements involved. For example, an N2 interface may be used for forwarding signaling data between the gNB and the AMF, e.g., transporting NAS messages embedded in NGAP messages over SCTP/IP. In another example, an N1 interface may be used as the logical path for NAS signaling between the UE and the AMF. Though physically carried over the RAN and relayed via N2, the NAS messages may target the AMF and may be forwarded to the appropriate container instance for processing. For example, when a gNB receives an initial UE registration request, it may encapsulate the NAS message in an NGAP Initial UE Message and send it via the N2 interface. A control logic component within the network core (such as a signaling router or load balancer) may receive this message and forward it to a selected AMF instance based on the state data.

In some examples, the control plane signaling data may include data to be transmitted via a control plane interface. A control plane interface may refer to a logical and/or physical communication interface that facilitates the transmission of the control plane signaling data between network elements within the mobile communications network. Such interfaces may be responsible for carrying signaling messages that are involved in managing network sessions, user registration, mobility, authentication, and resource allocation, as opposed to user plane interfaces, which may transport actual user data payloads. A control plane interface may conform to standardized protocols and specifications, e.g., defined by 3GPP. Examples of control plane interfaces may include the N2 interface, the N1 interface, the N11 interface, or the like.

In some examples, the determining of the runtime-environment is based on a load balancing policy. A load balancing policy may refer to a set of rules, thresholds, or decision criteria used to distribute control plane signaling data among the plurality of runtime-environments in a manner that optimizes one or more system-level objectives. These objectives may include balancing computational load, reducing response latency, maximizing throughput, avoiding overload, ensuring high availability of the at least one control plane function, or the like. The load balancing policy may be implemented as part of the control logic of the mobile communications network, e.g., within a dispatcher, a load balancer, a signaling router, or the like. The policy may evaluate the state data from the runtime-environments and may determine the runtime-environment based on at least one of current CPU utilization and/or memory usage, number of active UE sessions in each runtime-environment, prioritization (e.g., based on physical location, availability zone, network slice, or the like), historical data (e.g., historical response times, error rates, or the like), static weights or preferences associated with specific runtime-environments. For example, if a first runtime-environment is currently operating near maximum CPU capacity, and a second runtime-environment is underutilized, the load balancing policy may direct subsequent control plane signaling data to the second runtime-environment. In another example, if runtime-environments are tagged according to slice or service type, the policy may route traffic accordingly to maintain slice integrity.

In some examples, the method 100 may be at least partially carried out by a load balancing instance in the mobile communications network. A load balancing instance may refer to a logical or physical entity configured to receive control plane signaling data and perform the determination of a suitable runtime-environment for realizing the at least one control plane function. The load balancing instance may be implemented as a standalone network function, e.g., integrated within an ingress control element or distributed across a service mesh or cluster management layer. The load balancing instance may evaluate state data and apply the load balancing policy, as described above. In some examples, the mobile communications network may include a plurality of such load balancing instances. The plurality of load balancing instances may operate in parallel or be logically partitioned, for example, by region, slice, access point, connection to AMFs, or the like. To ensure coordinated processing and avoid duplication or inefficiencies, the method may further include selecting a suitable load balancing instance to forward the control plane signaling data. This selection may be based on various criteria such as geographic proximity to the gNB or to the AMF, network latency metrics, synchronization and availability status among load balancing instances, east-west coordination interfaces between instances, static assignment based on IP hashing or UE identifier segmentation, or the like. For example, the mobile communications network may deploy several distributed load balancing instances. When a UE connects via a gNB, the associated ingress controller may route the signaling data to the nearest or least-loaded load balancing instance for processing. That instance may then forward the data to a runtime-environment hosting an instance of the AMF or other control plane function, thereby completing the routing path.

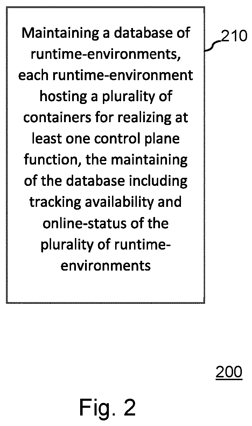

Fig. 2 depicts a method 200 for the mobile communications network described herein. Method 200 may be understood as an independent method or a method that complements or operates in conjunction with method 100 described above. Thus, methods 100 and 200 may be understood as one method with an exemplar ordering of method steps.

Method 200 focuses on maintaining a database about the state data of the plurality of runtime-environments. Thus, method 200 includes maintaining, 210, such a database of runtime-environments. In particular, the maintaining 210 of the database includes tracking the availability and online status of the plurality of runtime-environments.

The database may be stored and/or managed by a component of the mobile communications network, e.g., a service registry, a monitoring subsystem, a control-plane orchestrator, a dedicated repository function, or a combination thereof, or it may be an external database, e.g., on a remote server, cloud-based, or the like. In some examples, the database may be part of or functionally coupled with the network repository function (NRF) as discussed above in connection with method 100. The database may be continuously updated using telemetry, heartbeats, probe-based mechanisms, or the like, to track (at least one of) availability and online status of the plurality of runtime-environments, thus ensuring accuracy and freshness of the state data to be transmitted to the load balancing instance, for example.

In particular, tracking the availability and online status of a runtime-environment may comprise monitoring at least one of the following aspects (without limiting the present disclosure in that regard):
- Whether the runtime-environment is reachable over the network (e.g., via periodic health-checks or API queries),
- Whether the runtime-environment has passed internal liveness and readiness probes (e.g., Kubernetes pod status checks),
- Whether the containers hosted within the runtime-environment are active and responsive,
- Whether any recent deployment errors or restarts have occurred,
- Whether the node or host system supporting the runtime-environment is healthy and participating in the network.

The runtime-environments referenced here may correspond to those defined under reference of Fig. 1, such that a repetitive description thereof is omitted. Tracking the status of such runtime-environments may allow the network to dynamically adapt to changes in deployment topology, failure conditions, scaling events, or the like, thereby improving reliability and load distribution across the system.

By maintaining the database of runtime-environments, the network may make the state data accessible to other components, e.g., load balancers, signaling dispatchers, or the like, which may then use this data in the context of the method 100 to determine where to forward control plane signaling data to. The method 200 may thus support indirect coordination between control plane traffic handling logic and infrastructure monitoring services. Exemplary databases include Redis, Cassandra, PostgreSQL, or the like.

For example, in a 5G core network, the NRF (or a central metrics aggregator) may maintain an up-to-date list of AMF runtime-environments, including information about their readiness status, current instance identifiers, and associated network endpoints. This list may be queried or pushed to control entities that need to dynamically select a runtime-environment for processing the control plane signaling data.

In some examples, the method 200 further includes providing state data to the control plane function. In other words, the state data may be made available to the control plane function itself, i.e., to a containerized application instance that realizes the control plane function within specific runtime-environment. The purpose of providing the state data may be to allow the control plane function to dynamically adjust its behavior, resource allocation, or signaling logic based on awareness of the broader system state or a status of peer entities.

For example, an AMF container may retrieve state data indicating which other AMF instances are currently active and which are nearing capacity. This information may enable the AMF to decide whether to handle an incoming registration request locally or delegate it to another instance. In another example, an SMF may receive status updates about user-plane resources or UPF availability in different slices, and may adjust its PDU session establishment logic accordingly.

Providing such state data to the control plane function may enhance the autonomy, awareness, and adaptability of each containerized network function, allowing them to participate in distributed decision-making and load balancing without relying solely on centralized control logic.

In some examples, the method further includes providing, to the at least one control plane function, metadata about a user equipment intending to make use of the at least one control plane function.

The metadata about the UE may refer to descriptive or contextual information associated with the UE. The metadata may or may not be part of the control plane signaling data itself. The metadata may be obtained from other components of the mobile communications network (e.g., access nodes, subscriber databases, policy servers, analytics engines, or the like), and may be made available to the containerized control plane function in order to enable more efficient, personalized, or policy-compliant handling of signaling messages.

The metadata may include, but is not limited to a unique identifier of the UE (such as IMSI, SUPI, GUTI, or the like), information about the UE's current or last known location (e.g., tracking area ID, cell ID, access point, or the like), historical connection data (e.g., session logs, authentication outcomes, or the like), subscription-related data (e.g., assigned slices (S-NSSAI), service profiles, QoS entitlements, or the like), application-layer metrics (e.g., device capabilities, usage behavior patterns, or the like), an indication of the triggering event that led to the control plane signaling (e.g., initial access, handover, emergency call, or the like).

Thereby, context-aware processing of control plane signaling (e.g., registration decisions, slice selection, handover preparation) may be provided. Moreover, pre-validation or resource reservation based on UE type, mobility class, or service profile may be enabled. Furthermore the control plane function may be allowed to initiate downstream interactions with other core functions (e.g., UDM, PCF) based on pre-fetched or contextually relevant UE information.

For example, prior to forwarding a Registration Request to an AMF pod, a load balancing instance may retrieve UE metadata from a subscriber database or analytics service and forward this information alongside the control plane signaling data. The AMF instance may then use the metadata to prioritize authentication resources or select an appropriate serving slice based on the UE's subscription and mobility profile.

By providing UE-specific metadata to the control plane function, the mobile communications network may improve the efficiency, personalization, and compliance of signaling handling procedures while reducing latency and unnecessary signaling overhead with external data sources.

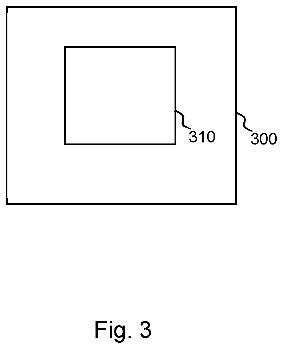

Fig. 3 depicts an apparatus 300 for forwarding control plane signaling data. The apparatus 300 includes processing circuitry 310 configured to carry out the method 100 or any aspect relating to the method 100 and/or any aspect relating to the method 200.

The processing circuitry 310 may be implemented using one or more (physical) processors, such as central processing units (CPUs), microcontrollers, digital signal processors (DSPs), or the like, which may execute software instructions stored in a local or remote memory. The processing circuitry 310 may also be implemented using programmable logic devices or system-on-chip architectures. In some examples, the processing circuitry 310 may form part of a server-based implementation, wherein the apparatus is deployed as a virtualized or physical network function. In other examples, the processing circuitry 310 may be part of a cloud-based infrastructure, wherein the apparatus is instantiated dynamically within a virtual machine or containerized workload, and orchestrated using platforms such as Kubernetes, OpenStack, or similar cloud-native frameworks.

In some implementations, the processing circuitry 310 may reside within or constitute a (dedicated) load balancer. In other implementations, it may be embedded in a containerized microservice deployed in a Kubernetes pod and orchestrated alongside other network functions. The processing circuitry 310 may also interact with internal databases, service registries such as the NRF, or telemetry frameworks to obtain updated state data. In each case, the processing circuitry 310 may be designed to execute the logic required for dynamic, runtime-aware routing of control plane signaling data within a containerized control plane framework.

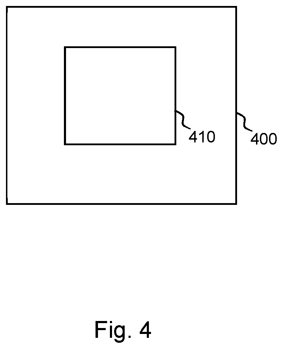

Fig. 4 depicts an apparatus 400 for maintaining a database of runtime-environments. The apparatus 400 includes processing circuitry 410 configured to carry out the method 200 or any aspect relating to the method 200 and/or any aspect relating to the method 100.

The processing circuitry 410 may be implemented using one or more (physical) processors, such as central processing units (CPUs), microcontrollers, digital signal processors (DSPs), or the like, which may execute software instructions stored in a local or remote memory. The processing circuitry 410 may also be implemented using programmable logic devices or system-on-chip architectures. In some examples, the processing circuitry 410 may form part of a server-based implementation, wherein the apparatus is deployed as a virtualized or physical network function. In other examples, the processing circuitry 410 may be part of a cloud-based infrastructure, wherein the apparatus is instantiated dynamically within a virtual machine or containerized workload, and orchestrated using platforms such as Kubernetes, OpenStack, or similar cloud-native frameworks. In some implementations, the processing circuitry 410 may reside within or constitute the NRF. In other implementations, it may be embedded in a containerized microservice deployed in a Kubernetes pod and orchestrated alongside other network functions.

In summary, the processing circuitry 410 may be implemented using hardware and software resources that are adapted for real-time data processing and database management, and may operate either as part of a centralized control node, a distributed service mesh component, or a virtualized cloud-native module.

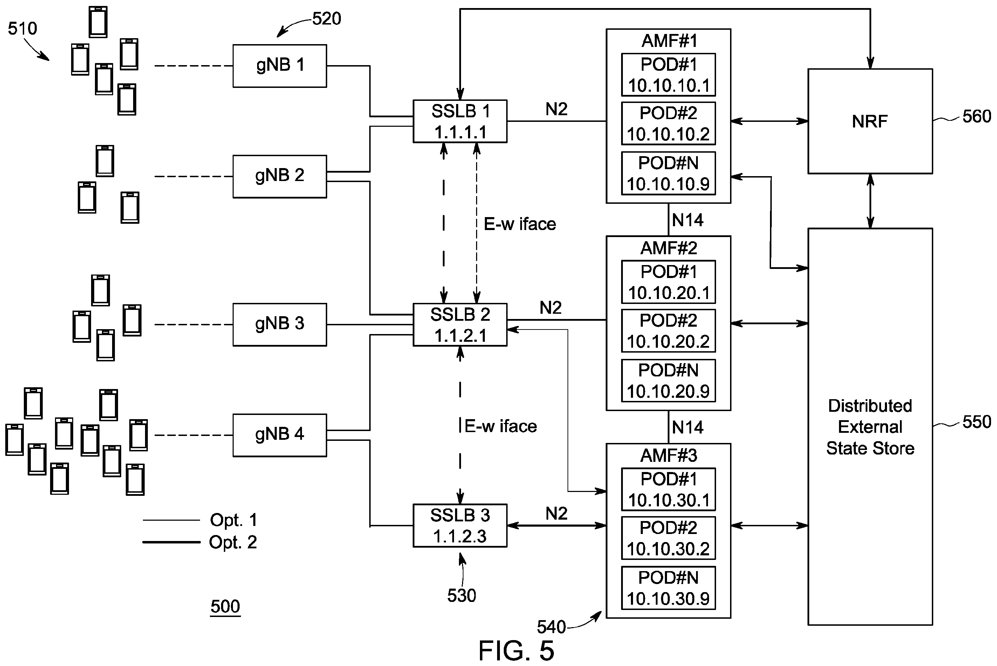

Fig. 5 depicts a mobile communications network 500 comprising the apparatus 300 and the apparatus 400. A repetitive description of the components of the mobile communications network 500 or the mobile communications network 500 itself is omitted since these entities are already defined herein.

In some examples, the mobile communications network 500 includes at least two apparatuses 300. The at least two apparatuses may be interconnected by an east-west interface (e.g., N14 interface). The east-west interface may be configured to enable intercommunication and load balancing of received control plane signaling data between respective apparatuses.

An east-west interface may refer to a communication interface used between functionally equivalent or cooperating network components operating at the same logical layer or hierarchical level within the network architecture. In contrast to north-south interfaces, which may connect higher-layer entities with lower-layer entities, an east-west interface may connect peer entities, such as distributed load balancing nodes, control plane routers, or signaling forwarding modules. The purpose of the east-west interface in this context may be to facilitate coordination, information exchange, and distributed decision-making among the apparatuses 300 for efficiently load-balancing and forwarding of the control plane signaling data.

In the present disclosure, the east-west interface may allow apparatuses to share state information regarding their own availability, forwarding performance, or processing load. This may include exchanging metadata about active UE sessions, recently forwarded signaling messages, temporarily unreachable runtime-environments, or ongoing failover operations. Based on such information, the apparatuses may balance incoming signaling flows among each other to avoid overloading a single instance or to maintain service continuity in the event of a fault.

The implementation of the east-west interface may be realized over an IP-based communication channel (without limiting the present disclosure in that regard), and may be based on standardized or proprietary protocols for peer-to-peer communication. In cloud-native deployments, the east-west interface may be implemented using service mesh communication, gRPC-based APIs, or message buses that operate within or across Kubernetes clusters or availability zones. In some examples, coordination over the east-west interface may allow at least one apparatus to delegate signaling processing responsibilities to another apparatus, e.g., based on proximity to the UE, current load, runtime-environment availability, or the like.

The east-west interface may thus contribute to a horizontally scalable and resilient network design, in which multiple forwarding apparatuses 300 cooperate in a distributed fashion to handle control plane signaling data traffic dynamically and efficiently

In some examples, the mobile communications network 500 further includes processing circuitry (explanation given above) configured to host at least one control plane function for each of the apparatuses for forwarding control plane signaling data. This means that the mobile communications network includes the computational infrastructure and orchestration capabilities required to instantiate, execute, and manage a plurality of containerized instances of control plane functions, such as the AMF.

The processing circuitry in this context may be distributed across multiple physical or virtualized compute nodes within the network. These nodes may be part of a cloud-based core infrastructure, an edge deployment, or a hybrid environment spanning several geographic or administrative domains. The processing circuitry may be configured to support the execution of containerized control plane applications within orchestrated runtime-environments, as described previously in the context of method 100.

The control plane functions hosted by the processing circuitry of the mobile communications network 500 may include multiple AMF instances, each of which may be instantiated as a containerized application and operated in isolation or in conjunction with a service mesh. The processing circuitry may further be adapted to dynamically scale the number of AMF instances based on signaling load, network slice allocation, or redundancy requirements. In this way, the network may maintain a distributed pool of control plane functions that can be selected or assigned by the apparatuses responsible for forwarding signaling data.

For example, the mobile communications network 500 may operate multiple processing clusters across different regions, each comprising compute nodes with processing circuitry capable of launching and hosting AMF containers. When an apparatus 300 forwards control plane signaling data to a selected runtime-environment, the processing circuitry of the network 500 may ensure that the runtime-environment is instantiated and ready to realize the AMF function. This configuration may support horizontal scalability, fault isolation, and efficient signaling distribution across the network infrastructure.

Accordingly, the network-level processing circuitry may enable deployment and execution of control plane functionality independently of the apparatuses 300 that forward signaling data, while still ensuring seamless coordination between forwarding and function realization through shared runtime state, orchestration control, and load balancing policies.

In the network 500 of Fig. 5, different elements are depicted which are discussed in the following as an exemplary implementation of the principles discussed herein.

In the network 500, a plurality of UEs 510 are connected to respective base stations (gNBs) 520. For illustrative purposes, four gNBs 520 are depicted, but it could be less or more than four gNBs 520. Each gNB 520 is connected to a load balancing instance 530 (also referred to as stateful SCTP load balancer or short, SSLB) or to more than one load balancing instance 530, such as gnBs 2 and 4. For illustrative purposes, three SSLBs 530 are depicted, but it could be less or more than three SSLBs 530. Each SSLB 530 is connected, via an N2 interface, to an AMF pod 540, each AMF pod 540 hosting a plurality of application containers to realize the AMF. The AMF pods 540 are interconnected via an N14 interface. Moreover, the AMF pods 540 are connected to a database 550 (also referred to as distributed external state store). Moreover, at least one SSLB 530 (in this example SSLB 1) is connected to an NRF 560, and at least one AMF pod 540 (in this example AMF#1) is connected to the NRF 560, and the database 550 is also connected to the NRF 560.

An SSLB 530 may be configured to manage SCTP (stream control transmission protocol) sessions in NGAP load balancing scenarios. The SSLB 530 may thus support stateful SCTP handling, which may include multi-homing and session-aware capabilities. These features may be useful for addressing the challenges posed by autoscaling AMFs in Kubernetes environments.

For supporting SCTP multi-homing and for maintaining stateful associations, the SSLBs 530 may provide session stickiness and route subsequent SCTP packets to the correct AMF pod 540 based on existing SCTP associations. The SSLB 530 may be capable of handling SCTP traffic effectively, which may be necessary for the N2 interface. It may maintain SCTP sessions, ensuring that traffic continuity is preserved even when AMF pods 540 are scaled up or down (as will be explained below).

The SSLBs 530 may further be configured for NGAP parsing and stateful management. For this purpose, it may include features for NGAP parsing and managing stateful sessions at the protocol level. Thereby, the session state may be preserved during load balancing or when AMF pods 540 are replaced or auto-scaled.

The SSLBs 530 may further be capable of cloud-native Kubernetes integration. It may support advanced load balancing features, including eBPF-based implementations, to achieve high performance and scalability. This may make it suitable for managing traffic in dynamic and distributed environments.

The SSLBs 530 may further be configured for fine-tuned load balancing for N2 traffic by allowing for configuration of load balancing policies tailored to the unique requirements of N2 traffic, such as session stickiness based on SCTP associations or NGAP messages, or the like.

The SSLBs 530 may further be configured for NRF-based SSLB discovery. SSLBs 530 may register with the NRF 560 to dynamically discover other SSLBs 530 and exchange session information for efficient load balancing and session management.

Accordingly, the SSLBs 530 may further be configured for SSLB-to-SSLB session handover/forwarding/routing. This may enable SSLBs 530 to dynamically share session information, hand over sessions, and intelligently route connections to the appropriate SSLB 530 based on session affinity, load distribution, intended destination, or the like.

The SSLBs 530 may further support high-availability setups with features like hitless failover. This may ensure that N2 traffic remains unaffected even during pod or node failures.

The database 550 may act as a centralized repository where the AMF pods 540 can store and retrieve state data. When an AMF pod 540 is scaled up (adding microservices) or down (terminating microservices), the state of a UE may persist in the state store, preventing session loss and ensuring continuity. Thus, the NRF 560 may be used for service discovery and storing metadata in the database 550. Moreover, the database 550 can be accessed by the NRF 560 to provide the SSLBs 530 an up-to-date view of the active AMF pods 540 and help choose the AMF pod 540 (or microservice) that can continue the session with the correct state of the UE. If no AMF pod 540 is available then, an AMF instance may be deployed with the NRF 560 providing the state and context info for this AMF instance, thus ensuring the UE session is uninterrupted.

The database 550 may further serve to decouple the UE states from the AMF pods 540. In Kubernetes, pods may be ephemeral. That means, if an AMF pod 540 is terminated or scaled-in, its in-memory UE context and UE state may be lost. The database 550 may decouple the state data of the UE from the lifecycle of the AMF pod 540, thereby allowing new pods to retrieve the state seamlessly. In this setup, the AMF pods 540 may store and retrieve UE context metadata and session state data. The NRF 560 may be configured to direct a respective AMF pods 540 to the appropriate location in the (distributed) database 550 for retrieval of the UE session and context data, ensuring consistent and reliable access to UE data across instances.

By maintaining states in a shared, fault-tolerant store, AMFs 540 can handle autoscaling without losing UE sessions. This may improve resilience of the system under dynamic load conditions. Moreover, when multiple AMF pods 540 are running, the database 550 may ensure that any instance can access the same consistent view of the UE states, which may be useful for maintaining SCTP associations and session continuity. If a pod fails, the database 550 may allow the new instance to recover the UE state and context, ensuring that the network functions (e.g., N2 and N1 signaling) remain consistent.

The NRF 560 may play a central role in the enabling efficient discovery, communication and scaling of network functions in a service-based architecture of the present disclosure. The NRF 560 may fulfill several functions, such as at least one of service discovery, state synchronization and coordination, distributed logging and locking, dynamic AMF reassignment, state retrieval, scaling scenarios, support for decoupling state from compute, SSLB metadata storage and querying, or the like.

Service discovery may relate to maintaining a database (or a registry) of AMF pods 540 (also including the microservices and including IP addresses, supported features, load status, and the like). Thereby, an up-to-date view of the active AMF pods 540 may be provided for the SSLB 530. Also, service continuity during AMF scaling or failure events may be ensured.

State synchronization and coordination may refer to the case that the NRF 560 serves as a directory service to inform which AMF pod 540 (or state store 550) holds relevant session or UE context. If one AMF pod 540 stores the state in a specific state store or database partition, the NRF 560 can provide this metadata to other AMF pods 540, ensuring all instances query the same location.

Distributed logging and locking may ensure that AMF pods 540 work in conjunction with the NRF 560 to store or update the UE context and states with the database 550. This may ensure consistency in scenarios where multiple AMF pods 540 might simultaneously process UE-related signaling.

Dynamic AMF reassignment may refer to the case that, when an SSLB 530 detects an AMF failure, it may query the NRF 560 for updated AMF pod information and it is provided with a list of available AMF instances. Then, the SSLB 530 may route SCTP traffic to the new AMF od 540.

State retrieval may refer to the case that an AMF pod 540 queries the NRF 560 for metadata about the UE context and state. In a distributed setup of the database, the NRF 560 may provide the AMF pod 540 with the location of the database (or state store). If the state is still in transition between two AMF pods 540, the NRF 560 may indicate the last known owner of the session or provide the metadata for the UE state and context.

Scaling scenarios may refer to the case that, when a new AMF pod 540 and sessions are launched, the NRF 560 may dynamically update its registry to include the new NRF pod 560. The NRF 560 may provide an updated list of AMF pods 540 to the SSLBs 530.

Support for decoupling state from compute may refer to the case that, when an AMF pod 540 terminates (is scaled-in), the NRF 560 may ensure that a new AMF pod 540 can access the same UE state, enabling session continuity by integrating with the database 550.

SSLB metadata storage and querying may refer to the case that the NRF 560 stores the SSLBs 530 metadata (e.g. serving AMF pod 540, which SSLB 530 to be used as communication proxy, or the like) and their associated AMF pods 540. The SSLBs 530 may update this information periodically or based on events. The SSLBs 530 may query the NRF 560 to get information about other SSLBs 530 for session forwarding or routing.

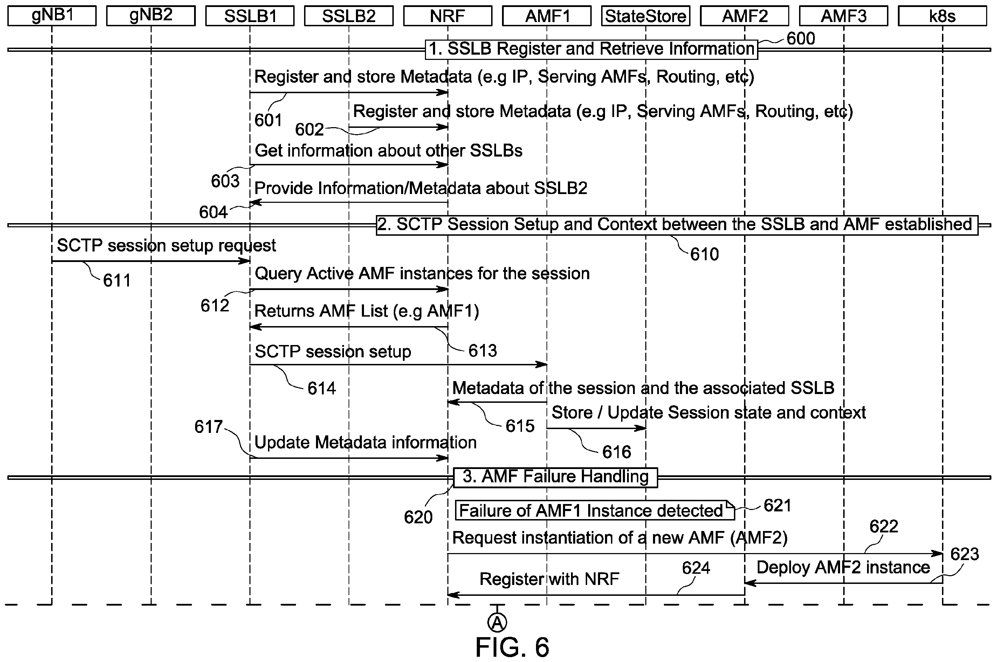

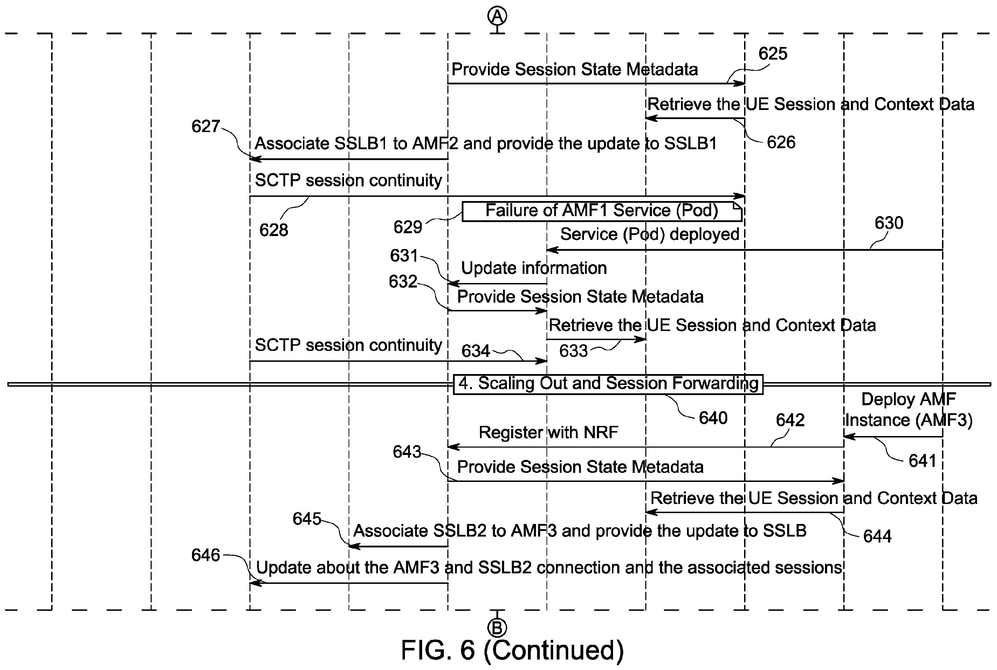

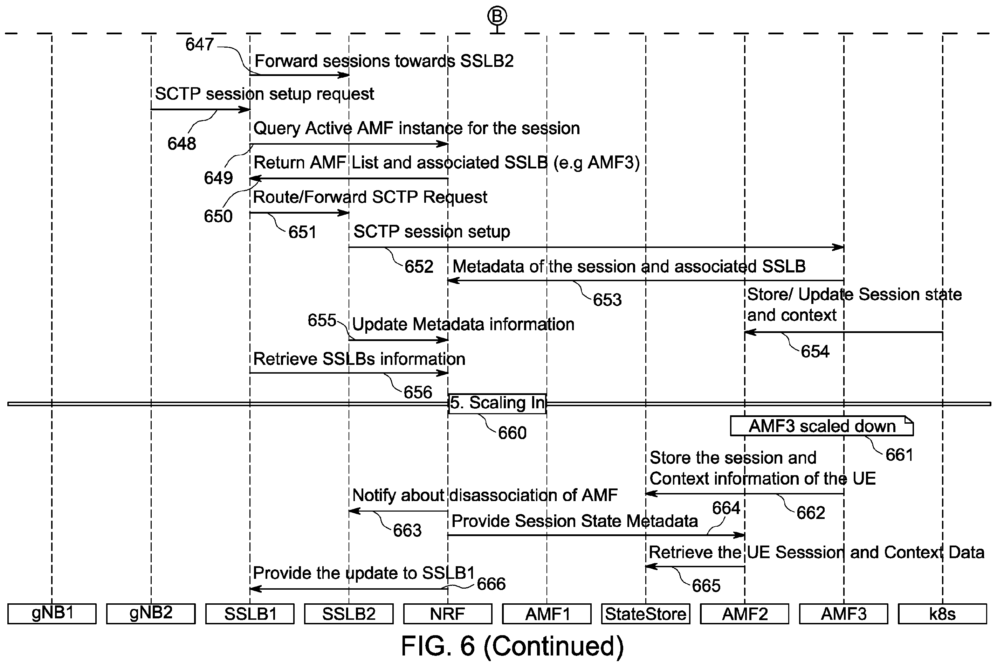

Fig. 6 depicts method 600, 610, 620, 640, and 660 which may be combined to one method or several sub-methods, and that may be carried out in the mobile communications network 500 or in any other mobile communications network that can work in conjunction with the principles of the present disclosure.

Method 600 is a method for SSLB registration and metadata retrieval. At 601 and 602, SSLB1 and SSLB2 register with the NRF 560 and store metadata in the NRF 560. This may include the IP address, AMF pods 540 they serve and their connections to the other SSLBs 530 (e.g., used for routing or session forwarding). SSLBs can also retrieve information about the other SSLBs 530 from the NRF 560 to route or forward sessions, as indicated at 603 with a request, from SSLB1 to the NRF 560. At 604, the NRF 560 returns a list of active AMFs and their associated session context locations to SSLB1.

Method 610 is a method for SCTP session setup. At 611, a UE initiates a new SCTP session via gNB1 and SSLB1. At 612, SSLB1 queries the NRF 560 for an active AMF pod 540. The NRF 560 return AMF#1, at 613, and thus, at 614, the SSLB1 routes the session to AMF#1. At 615, AMF#1 updates the NRF 560 about the session metadata. At 616, AMF#1 handles the UE's initial signaling and stores the session state and context in the database 550. This may includes the session ID, link or information to where the session state and data is stored in the state store, etc.), state location, and the like.

Method 620 is a method for AMF failure handling. If the whole AMF#1 pod fails, 621, the NRF 560 detects the failure and requests, 622, the Kubernetes (k8s) control plane to instantiate a new AMF pod 540 (e.g., AMF#2). k8s deploys AMF#2, which registers, 624, with the NRF 560. The NRF 560 provides, 625, AMF#2 with session state metadata and AMF#2 retrieves, 626, the UE session and context data from the database 550. The NRF 560 updates, 627, SSLB1, associating it with AMF#2 for session continuity. SSLB1 re-establishes, 628, the SCTP session with AMF#2 to ensure seamless service.

In case of an AMF#2 failure, 629, a standby or new pod is deployed, 630, in AMF#1. AMF#1 then updates, 631, its metadata in the NRF 560, receives session metadata, and retrieves the UE's state and context data, ensuring uninterrupted service. AMF#1 retrieves, 633, the UE context from the database 550 and resumes handling the session, 634.

Method 640 is a method for scaling out and session forwarding. Scaling actions may be triggered by certain events (internal or external) which may not further be detailed here. In scaling-out scenarios, when AMF#3 is deployed, 641, it registers, 642, with the NRF 560, which provides, 643, the session state metadata. AMF#3 then retrieves, 644, the UE session and context metadata from the database 550. An SSLB (in this case, SSLB2) is associated, 645, with AMF#3, and the update is sent, 646, to SSLB2 to ensure seamless session management. Any existing sessions associated with AMF3 are forwarded, 647, by SSLB2 to SSLB3, ensuring seamless session continuity and load distribution. If a new session is initiated, 648, SSLB1 queries, 649, information about the intended AMF (AMF#3) and receives, 650, its associated SSLB2 through event notifications or periodic updates. The session request is then forwarded/routed, 651, to SSLB2, which handles, 652, the session setup and communication with AMF#3. AMF#3 transmits, 653, the metadata to the NRF 560, reflecting its association with SSLB2, and updates, 654, the session state and context at the database 550. SSLB2 updates, 655, its metadata in the NRF 560 and stores the UE state and context information in the database 550. SSLBs may periodically request updates from the NRF 560 to retrieve the latest metadata and information about associated SSLBs and AMFs, as shown at 656 with the example of SSLB1.

Method 660 is a method for scaling in. When AMF#3 is scaled down, 661, it stores, 662 the session state and context in the database 550. SSLB2 is informed about the disassociation of AMF3 at 663 by the NRF 560. AMF#2 is provided, 664, with the session metadata to facilitate retrieval of the session state at 665 when needed. SSLB1 is updated, 666, with the new information, ensuring seamless session continuity and network adaptation.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for a mobile communications network (500), the mobile communications network (500) being configured for providing at least one control plane function as a containerized application, the method (100) comprising:
receiving (110) control plane signaling data intended for the at least one control plane function;
determining (120), based on state data of a plurality of runtime-environments (540) each hosting a plurality of containers, a runtime-environment (540) to realize the at least one control plane function; and
forwarding (120) the control plane signaling data to the determined runtime-environment (540).

2. The method (100) of claim 1, wherein the at least one control plane function includes an access and mobility management function, AMF.

3. The method (100) of claim 1 or 2, wherein the state data are received from a network repository function (560).

4. The method (100) of any one of claims 1 to 3, wherein the control plane signaling data includes data to be transmitted via a control plane interface.

5. The method (100) of any one of claims 1 to 4, wherein the determining of the runtime-environment (540) is based on a load balancing policy.

6. The method (100) of any one of claims 1 to 5, wherein the method (100) is at least partially carried out by a load balancing instance (300; 530) in the mobile communications network (500),
wherein the mobile communications network (500) includes a plurality of load balancing instances (300; 530), and
wherein, for determining the runtime-environment (540), the method (100) further comprises:
selecting a suitable load balancing instance (300; 530) to forward the control plane signaling data.

7. A method (200) for a mobile communications network (500), the mobile communications network (500) being configured for providing at least one control plane function as a containerized application, the method (200) comprising:
maintaining (210) a database (550) of runtime-environments (540), each runtime-environment (540) hosting a plurality of containers for realizing the at least one control plane function, the maintaining (210) of the database including tracking availability and online-status of the plurality of runtime-environments (540).

8. The method (200) of claim 7, further comprising:
providing state data to the control plane function.

9. The method (200) of claim 7 or 8, further comprising:
providing, to the at least one control plane function, metadata about a user equipment (510) intending to make use of the at least one control plane function.

10. A computer program comprising instructions which, when the computer program is carried out on a computer, causes the computer to carry out the method of any one of claims 1 to 6 and/or any one of claims 7 to 9.

11. An apparatus (300; 530) for forwarding control plane signaling data, the apparatus (300; 530) comprising processing circuitry (310) configured to carry out the method (100) of any one of claims 1 to 6.

12. An apparatus (400; 560) for maintaining a database (550) of runtime-environments (540), the apparatus (400; 560) comprising processing circuitry (410) configured to carry out the method (200) of any one of claims 7 to 10.

13. A mobile communications network (500) comprising:
an apparatus (300; 530) for forwarding control plane signaling data according to claim 11; and
an apparatus (400; 560) for maintaining a database (550) of runtime-environments (540) according to claim 12.

14. The mobile communications network (500) of claim 13, further comprising:
at least two apparatuses (300; 530) for forwarding control plane signaling data according to claim 11, wherein the at least two apparatuses (300; 530) for forwarding control plane signaling data are interconnected with an east-west-interface for intercommunicating and load balancing of received control plane signaling data.

15. The mobile communications network (500) of claim 14, further comprising processing circuitry configured to host at least one control plane function for each apparatus (300; 530) for forwarding control plane signaling data.
